# EUROPEAN PATENT APPLICATION

(11) **EP 3 471 062 A1**
(43) Date of publication of application: **17.04.2019**
(21) Application number: 17836271.1
(22) Date of filing: 14.07.2017
(51) Int. Cl.: G06T 13/80

(54) **ANIMATION CREATION METHOD AND DEVICE**

(30) Priority: 01.08.2016 CN 201610622304
(71) Applicant: Beijing Xiaoxiaoniu Creative Technologies Ltd, Beijing 100084 (CN)
(72) Inventor: CAO, Xiang, Haidian District, Beijing 100084 (CN); SHI, Tao, Haidian District, Beijing 100084 (CN); XU, Wenchang, Haidian District, Beijing 100084 (CN)
(74) Representative: Slingsby Partners LLP
(86) International application number: PCT/CN2017/092940
(87) International publication number: WO 2018/024089

(57) **Abstract**

The present disclosure provides a method and an apparatus for making an animation. The method includes: acquiring an animation subject; binding the animation subject to a corresponding structural template; and actuating the structural template to drive the animation subject bound to the structural template to perform a corresponding action. With embodiments of the disclosure, it is possible for a user who does not master knowledge of professional animation principles to easily create an animation that the user likes and has professional effects by simple operations, and thus the solutions is simple and convenient to operate, vivid and interesting and has a wide range of applications.

## Description

### TECHNICAL FIELD

The disclosure relates to the field of animation technology, and in particular relates to a method and an apparatus for making an animation.

### BACKGROUND

With rapid development of entertainments, people's demand for animations is increasing. Traditionally, an animation is generated by a professional animator using one of the two following methods.

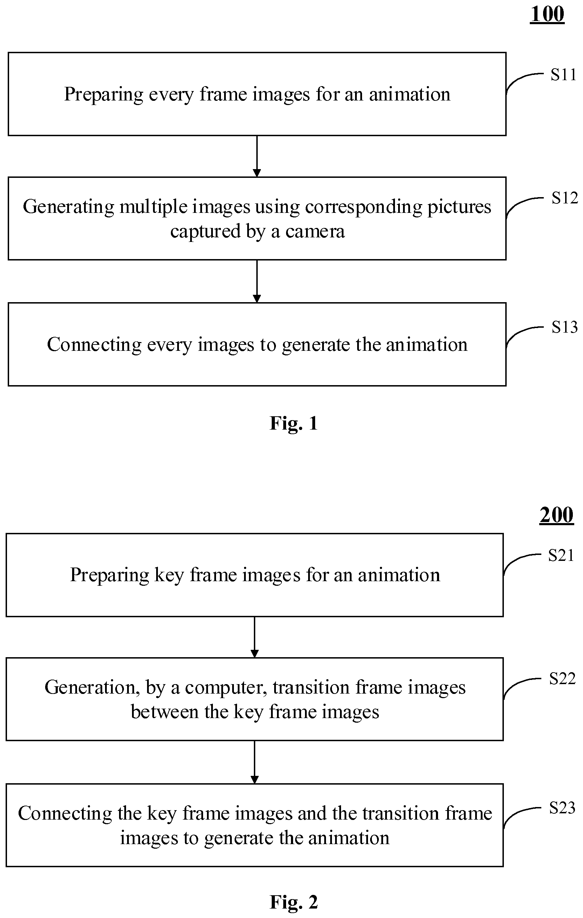

The first method is frame-by-frame animation, also known as stop-motion animation. Fig. 1 is a flowchart illustrating a method for making a frame-by-frame animation. As shown, at step S11, every frame images for an animation are prepared by a professional animator; at the step S12, a plurality of images are generated from corresponding pictures captured by a camera; at the step S13, the animation is generated by connecting the images in series. To make an animation in this way, it requires a professional animator to prepare every frame images for the animation, which involves large workload and repeated operations, and thus is tedious and time consuming.

The second method is key-frame animation. Fig. 2 is a flowchart illustrating a method for making a key-frame animation. As shown, at the step S21, key frame images for an animation are prepared by a professional animator; at the step S22, transition frame images between the key frame images are generated by a computer; at the step S23, the animation is generated by connecting the key frame images and the transition frame images in series. In this way, only the key frame images for the animation are prepared by the professional animator, so related workload is much less than the first method. However, it requires the professional animator to have a deep understanding of motion patterns between the key frame images in order to generate, by using a computer, the transition frame images between the key frame images. Thus, this method is professional and thus is not suitable for an ordinary user to make this kind of animation.

Therefore, since the existing animation methods involve professional art and computer knowledge, it is impossible for an ordinary user to make an animation according to his/her own wishes, and thus an ordinary user has to accept animations produced by professional animators.

### SUMMARY

In view of one or more of the problems described above, embodiments of the present disclosure provide a method and apparatus for making an animation.

In an aspect, there is provided a method for making an animation. The method comprises: acquiring an animation subject; binding the animation subject to a corresponding structural template; actuating the structural template to drive the animation subject bound to the structural template to perform a corresponding action.

In another aspect, there is provided an apparatus for making an animation. The apparatus comprises: an animation subject acquisition unit configured to acquire an animation subject; an animation subject binding unit configured to bind the animation subject to a corresponding structural template; an animation production unit configured to actuate the structural template to drive the animation subject bound to the structural template to perform a corresponding action.

In yet another aspect, there is provided an apparatus for making an animation. The apparatus comprises: a memory for storing material data and programs; a processor for executing the programs stored by the memory, which cause the processor to perform the following operations: acquiring an animation subject; binding the animation subject to a corresponding structural template; actuating the structural template to drive the animation subject bound to the structural template to perform a corresponding action; and a display for displaying performance of the action by the animation subject.

With embodiments of the disclosure, it is possible for a user to make an animation that he/she likes and has professional effects by simple operations without mastering knowledge of professional animation principles. The solutions are simple and convenient to operate, vivid and interesting, and have a wide range of applications.

### BRIEF DESCRIPTION OF THE DRAWINGS

In order to more clearly illustrate technical solutions of embodiments of the present disclosure, the drawings used in the embodiments of the present disclosure will be briefly described below. It is obvious that the drawings described below illustrate only some embodiments of the present disclosure. It is possible for a person skilled in the art to obtain other drawings based on these drawings without any inventive effort.
Fig.1 is a schematic flowchart of a first implementation of a method for making an animation in prior arts;
Fig.2 is a schematic flowchart of a second implementation of a method for making an animation in prior arts;
Fig.3 is a schematic flowchart illustrating a method for making an animation according to embodiments of the disclosure;
Fig.4 is a schematic flowchart of a first embodiment of acquiring an animation subject in Fig. 3;
Fig.5 is a schematic flowchart of a second embodiment of acquiring an animation subject in Fig. 3;
Fig. 6 is a schematic flowchart of a third embodiment of acquiring an animation subject in Fig.3;
Fig.7 is a schematic flowchart of a first embodiment of binding an animation subject to a corresponding structural template in Fig. 3;
Fig.8 is a schematic flowchart of a second embodiment of binding an animation subject to a corresponding structural template in Fig. 3;
Fig. 9 is a schematic diagram showing functional structure of an apparatus for making an animation according to embodiments of the present disclosure;
Fig. 10 is a schematic diagram showing functional structure of a first embodiment of an animation subject acquisition unit according to the disclosure;
Fig.11 is a schematic diagram showing functional structure of a second embodiment of an animation subject acquisition unit according to the disclosure;
Fig.12 is a schematic diagram showing functional structure of a third embodiment of an animation subject acquisition unit according to the disclosure;
Fig.13 is a schematic diagram showing functional structure of a first embodiment of a structural template binding unit according to the disclosure;
Fig. 14 is a schematic diagram showing functional structure of a second embodiment of a structural template binding unit according to the disclosure;
Fig. 15 is a schematic structural view of a first embodiment of an apparatus for making an animation according to the disclosure; and
Fig. 16 is a schematic structural view of a second embodiment of an apparatus for making an animation according to the disclosure.

### DETAILED DESCRIPTION

The technical solutions in embodiments of the disclosure will be clearly and completely described hereinafter with reference to the accompanying drawings of the embodiments of the disclosure. It will be apparent that the described embodiments are a part of embodiments of the disclosure, rather than all of the embodiments. It is possible for a person skilled in the art to anticipate other embodiments than those described in the disclosure without any inventive effort, which also fall within scope of the present invention.

Features and exemplary embodiments of various aspects of the disclosure will be described in detail below. In the following detailed descriptions, numerous specific details are set forth in order to provide a complete understanding of the invention. It will be apparent to a person skilled in the art, however, that the invention may be practiced without some of these details. The following descriptions of embodiments is merely provided to provide a better understanding of the invention. The present invention is in no way limited to any specific configurations and algorithms set forth below, but cover any modifications, alternations and changes of elements, components and algorithms without departing from the spirit and scope of the invention. In the drawings and the following descriptions, well-known structures and techniques are not shown in order to avoid unnecessary obscuring the invention.

Example embodiments will now be described more fully with reference to the accompanying drawings. However, the example embodiments can be embodied in a variety of forms and should not be construed as being limited to the embodiments set forth herein. These embodiments are provided to make the present invention more comprehensive and complete, and fully convey the concept of the example embodiments to a person skilled in the art. Furthermore, the described features, structures, or characteristics may be combined in any suitable manner in one or more embodiments. In the following descriptions, numerous specific details are set forth in order to provide a complete understanding of the invention. In some instances, well-known structures, materials or operations are not shown or described in detail to avoid obscuring the invention.

It should be noted that embodiments themselves and features in various embodiments in the disclosure may be combined with each other without conflict. The present application will be described in detail below with reference to the accompanying drawings.

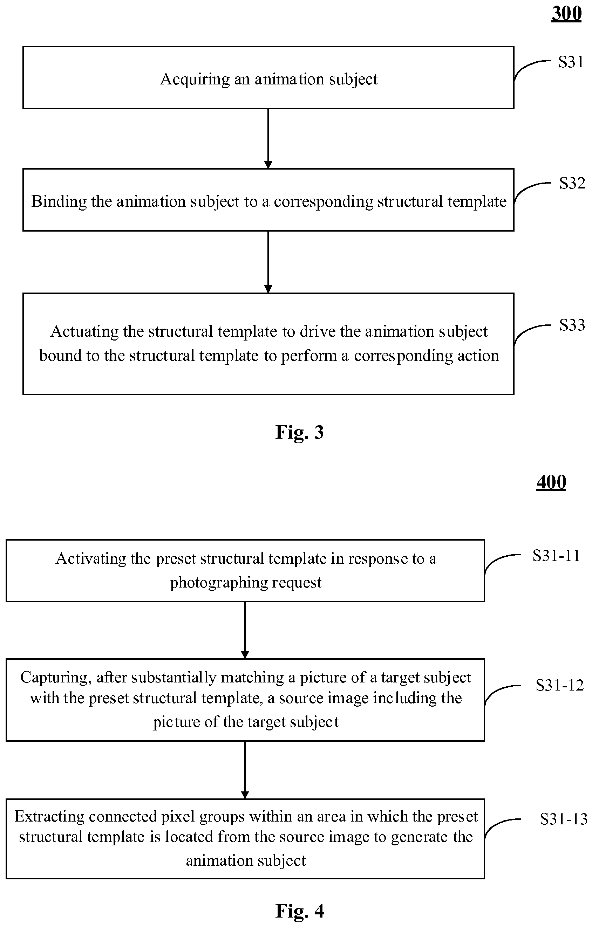

Fig.3 is a flowchart 300 illustrating a method for making an animation according to embodiments of the disclosure.

In step S31, an animation subject is acquired.

The animation subject may be a subject in one or more scenes. For example, the animation subject may be a pedestrian on a road, a small fish in a fish tank, a cloud in the sky, or the like. The animation subject may also be a picture drawn on a drawing plane or an item placed on the drawing plane. The drawing plane may be a drawing card with preset background, or a drawing card with a solid color as background. For example, the drawing plane may be a physical plane such as a paper, canvas, or desktop. In practice, appearance of an animation subject may be created by a user by way of drawing, material cutting and pasting, shaping or spelling. The animation subject herein may include, but is not limited to, a character, an animal, any creature from nature, an artificially conceived living object, and an object or figure that do not have life but can be artificially given actions.

Therefore, in some embodiments of the present disclosure, it is possible to form a picture by drawing on a drawing card with preset background or directly placing an item on a preset card, which is not only simple and convenient, but also results a vivid and lively picture due to the drawing plane as background, and thus is interesting for a lot of users, especially for children.

Further, by drawing on a drawing card with preset background according to embodiments of the present disclosure, professionalism of animation production can be enhanced. Moreover, by drawing on a drawing card with a solid color as background according to embodiments of the disclosure, needs to prepare materials and thus cost for animation production can be reduced.

In some embodiments, a picture may be acquired by a user initiatively photographing with a device having a camera, or may be acquired automatically by a fixed portable device, which is not limited in this respect.

In some embodiments, the method for making an animation may further include: recording images frame by frame during actions of the animation subject; generating an animation file according to the recorded images, or further configuring background and/or an audio file for the animation file; and displaying and/or storing the animation files.

By generating the animation file by way of recording the animation subject frame by frame and displaying and/or storing the animation file in real time according to embodiments of the disclosure, it is convenient for a user to preview or playback the generated animation file.

In addition, by configuring background and/or an audio file for the animation file according to embodiments of the disclosure, professional effects can be obtained by simple animation operations and user's satisfaction can be improved.

The configured background may be background on the preset card. Therefore, by using background on the preset card as background for the animation according to embodiments of the disclosure, it is possible for the animation to be coordinate with the background, and thus professional effects can further be improved.

In embodiments of the disclosure, the acquired animation subject will be bound to a corresponding structural template. Specifically, the structural template may be a preset structural template, an automatically generated structural template, or a manually generated structural template, or any combination thereof. The implementation of acquiring an animation subject may be different with respect to a different type of a structural template, and will be respectively described with reference to embodiments as shown in Figs. 4, 5 and 6.

Fig. 4 is a schematic flowchart 400 illustrating a first embodiment of acquiring an animation subject (i.e., the step S31 in Fig. 3). In this embodiment, the structural template is a preset structural template.

In step S31-11, a preset structural template is activated in response to a photographing request.

In some embodiments, the preset structural template may display a frame structure, a contour structure, or a skeleton structure of an animation subject, which depends on the type of the animation subject. The type of an animation subject may be a person, an animal, a plant and an item or the like. Specifically, the type of an animation subject may be an old person, a child, a young men, a young women, a cat, a dog, a fish, a flower, a bird, or grasses and the like. The type of an animation subject may be specifically personalized according to requirements of the involved animation, which is not limited in this respect.

In some embodiments, an animation material database may be set in advance. The database may store different types of structural templates related to various types of animation subjects.

In the case that there is no preset structural template matched with the animation subject, a structural template matched with the animation subject may be created based on the animation subject and then stored into the animation material database in association with the animation subject.

Therefore, according to embodiments of the disclosure, an animation material database may be prepared in advance and new materials may be continuously added to the database such that materials in the database increase over time, and thus there are more and more materials that can be selected by a user for animation production, and thereby animation effects will be better and better and professionalism become stronger and stronger.

In step S31-12, a source image including a picture of a target subject is taken after substantially matching of the picture of the target subject with the preset structural template.

In some embodiments of the disclosure, the photographing request may be a photographing request issued by a user to a device. Specifically, it may be implemented by the user selecting a photographing icon through human-computer interaction. The way of human-computer interaction may include, but is not limited to, screen touch, mouse click and keyboard typing, or camera capture of a representation with texts, symbols, colors, etc. on the drawing plane or space, or any other method.

In some embodiments of the disclosure, the user can hold the device, and takes, after the animation subject is substantially fitted with the preset structural template under guidance of the preset structural template, a source image including the picture of the target subject. The camera may capture multiple images of front and back frames of the source image for subsequent image extraction.

In some embodiments, the preset structural template may be obtained from an existing database, or may be designed by a developer (or the user) of an involved software system before the animation production. The structural template may be specifically implemented as follows.

The structural template may be constructed by a set of data describing a structure of an object. Specifically, the developer may first conceive approximate attributes of the structural template and appearance of a corresponding animation subject, and extract handle nodes or a skeleton tree that can trigger movement of the structural template. While designing the structural template, the developer can also design outline of the animation subject as a preset area for the subject, so that the user can align the picture of the target subject with the structural template during photographing to facilitate subsequent animating subject extraction operation. In the database storing the structural template, the handle node is usually represented by two-dimensional coordinates, and the skeleton tree is a tree structure data comprises bone data (including bone length, parent bone information and restriction information, etc.). The preset area may be represented by a contour vector. For example, in order to define a structural template for a dog, six key points respectively corresponding to the limbs, the head and the tail and a root node corresponding to the waist can be set. The waist node includes two bones of the spine and the caudal vertebrae, wherein the spine contains two forelimb bones and a neck bone, and the caudal vertebrae contains two hind limb bones and a tail bone, from which a skeleton tree is obtained. Next, outline of the dog standing with four legs is drawn as the preset area.

In some embodiments, the preset structural template may be designed by the developer and stored in a database of an animation production device (hereinafter referred to as a device). For example, the preset structural template may be stored in an APP application of a tablet or mobile phone, such that it can be selected by the user manually or by the device automatically. The manner of the user's manual selection includes various inputs to the device through human-computer interaction and acquisition of a structural template stored in the database by the device. The manner of the device's automatic selection requires the developer to store activation conditions corresponding to the structural templates in the database. The device can extract shape features (such as positions and the number of protruding portions, and an overall area and height of the outline) of the animation subject by means of image analysis, to classify the outline of the animation subject, thereby decide a template to use. For example, the device may determine the number of legs according to the number of protruding portions in lower part of an overall outline of the animation subject, and at the same time determine whether it is an upright state or a crawling state based on its height, thereby determine whether a upright human structural template or a four-legged reptile structural template should be used for the animation subject.

In embodiments of the disclosure, activation of the preset structural template may guide the user to take an image after the picture of the target object is substantially matched with the preset structural template for acquiring the source image. Such design makes it easy to bind the animation subject directly to the structural template later, thereby reducing the step of aligning the animation subject with the structural template, and thus the amount of data processing can be reduced, and success rate of binding the animation subject to the structural template can be improved. In turn, effects and quality of the animation can be improved.

In some embodiments of the disclosure, the photographing device may be any computing device that includes or is connectable with a camera, including but not limited to a computer, a mobile phone, a tablet computer, a handheld computing device, or a stationary experience device. The device may also be provided with a display device such as a display screen, a projector, etc. for previewing and ultimately rendering the animation.

In step S31-13, an animation subject is generated by extracting from the source image connected pixel groups in a preset area of the structural template.

In some embodiments of the disclosure, since the animation subject is composed of all pixels included in one or more connected regions, it is possible to extract the animation subject from the source image by image analysis. Specifically, contour searching and morphological processing may be performed on pixels in the preset area (for example, in the area where the preset structural template is located) to extract connected pixel groups as the animation subject. If there is no pixel group that meets a criteria in the preset area, animation subject extraction fails. At this point, the steps of photographing a source image and extracting the animation subject from the source image should be repeated.

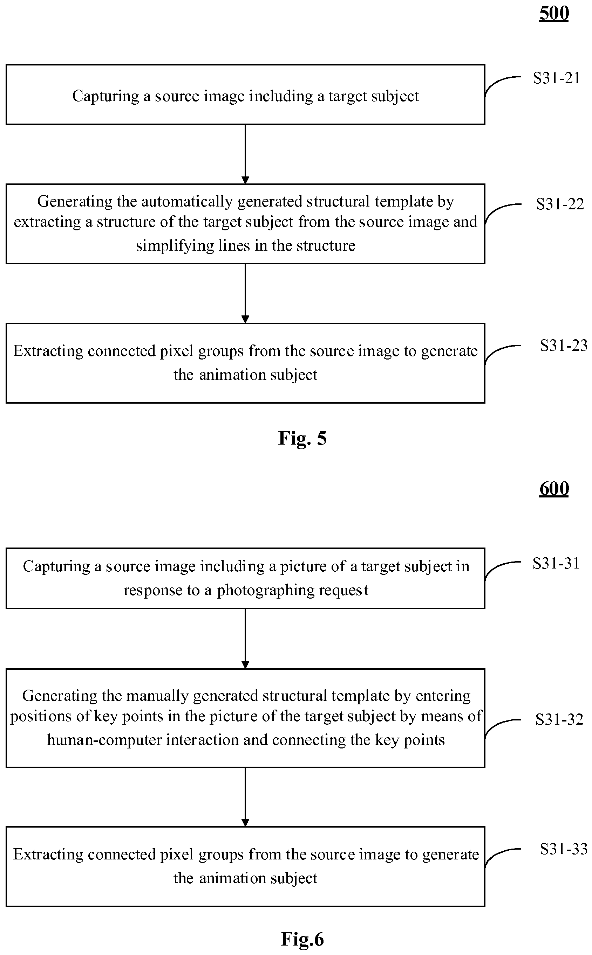

Fig. 5 is a flowchart 500 of a second embodiment of acquiring an animation subject (i.e., step S31 in Fig. 3). In this embodiment, the structural template is an automatically generated structure template.

In step S31-21, a source image including a target subject is taken.

In some embodiments of the disclosure, the device can be fixed on the desktop or the ground, so that the camera in the device is able to capture against a drawing plane or a scene, and then the device automatically collects and analyzes every frame images. For example, when it is found that there is no subject motion in a drawing plane or in a scene for a period of time, it can be determined that the user has finished drawing or placing operations, and then the device can select an image at the moment as the source image. The determination as to whether there exists subject motion during a time period may be realized by various motion detection methods in computer's image analysis, such as frame differencing method and optical flow method.

In step S31-22, an automatically generated structure template is generated by extracting a structure of the target subject from the source image and simplifying lines of the structure.

The automatically generated structural template may be generated by using a common shape analysis algorithm to extract a skeleton of connected areas, remove lines being too short in length in the skeleton, and simplify the skeleton into fold lines having less key points by an approximate method. The simplified lines can be converted into different types of structural templates, depending on implementation of a structural template. For example, a handle node may be formed using an intersection of skeleton lines, or a root node may be formed using a central intersection, and as for the remaining intersections, a tree originated from the root node can be created as the skeleton.

In step S31-23, an animation subject is generated by extracting connected pixel groups from the source image.

There are various methods for fully automatic subject extraction. Specifically, various image segmentation algorithms can be used to extract pixels in a largest connected area in the image that meet certain conditions (such as having uniform pixel color and located near the center of the source image). For the manually captured source image, a background subtraction can be performed based on frames before and after the source image in an acquired sequence of frames to extract foreground pixels, and the foreground pixels are used as the animation subject.

It should be noted that steps S31-22 and step S31-23 may be performed in a contrary order. That is, it is possible to extract the animation subject first and then generate the structural template or generate the structural template first and then extract the animation subject, both of which fall within the scope of the present invention.

Fig. 6 is a flowchart 600 of a third embodiment of acquiring an animation subject (i.e., step S31 in Fig. 3). In this embodiment, the structural template is a manually generated structural template.

In step S31-31, a source image including a picture of a target subject is taken in response to a photographing request.

Implementation of this step may refer to foregoing descriptions, and details are not described herein.

In step S31-32, a manually generated structural template is generated by entering position of key points (such as handle nodes, skeleton root node, or children nodes, etc.) in the picture of the target subject through human-machine interaction (for example, click on a touch screen) and connecting the key points.

In this embodiment, if the structural template is manually generated by the user or automatically generated by the device, the method for extracting the subject by the device may be fully automatic or semi-automatic. A semi-automatic method is based on a fully automatic method and extraction thereof is performed by the device under the user's guidance. For example, an outline may be drawn by the user with a red watercolor pen and inside part of the outline may be used as the subject, and then the device may perform a pattern recognition method to classify color of the outline, and filter out from those automatically extracted pixel groups an area outlined in red, and select pixels in the area as the subject.

In some optional embodiments, the above three cases (a predetermined structural templates, an automatically generated structure template, and a manually generated structural templates) may be combined to different degrees. The following is an example of an implementation in which a preset structural template is combined with an automatically generated structural template.

Firstly, a topology of a predefined structural template, such as a quadruped or a standing person, etc. is determined in advice. Then, a trunk and limbs having respective length of the animation subject are automatically generated. Specifically, after extracting a topological skeleton of the subject, length of a skeleton line of a corresponding part is calculated, so that the predefined skeleton is better adapted to the subject.

In steps S31-33: an animation subject is generated by extracting connected pixel groups from the source image.

Implementation of this step may refer to foregoing descriptions, and details are not described herein.

It should be noted that the step S31-32 and the step S31-33 can be performed in a contrary order. That is, it is possible to extract the animation subject first and then generate the manually generated structural template or generate the manually generated structural template first and then extract the animation subject, both of which fall within the scope of the present invention.

Referring back to Fig. 3, in step S32, the animation subject is bound to a corresponding structural template. This step is described in detail below by two embodiments.

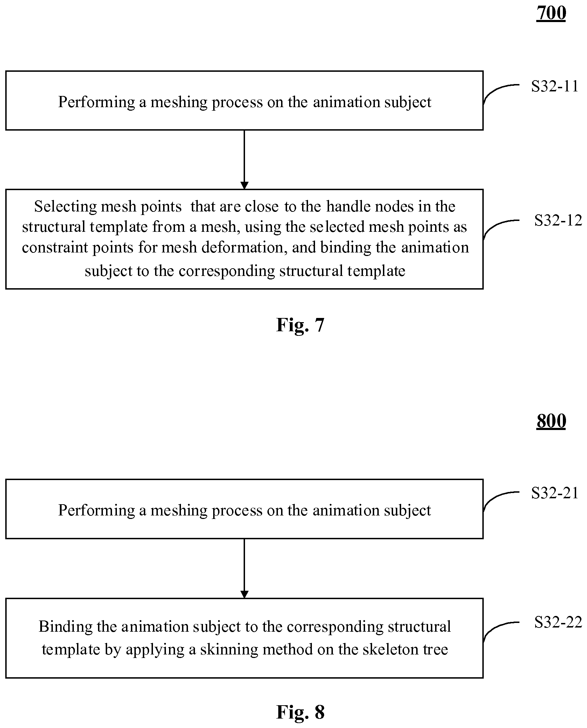

Fig. 7 is a flowchart 700 of a first embodiment of binding an animation subject to a corresponding structural template in Fig. 3 (i.e., step S32 in Fig. 3). In this embodiment, the structural template comprises handle nodes.

In step S32-11, a meshing process is performed on the animation subject.

In this embodiment, a meshing process is performed on the animation subject with mesh cells respectively having a shape of a triangle, a quadrangle or any other irregular pattern. Specifically, any common meshing algorithm can be used to implement the meshing process, which is not limited in this respect.

In step S32-12, mesh points that are close to the handle nodes in the structural template are selected from a mesh and used as constraint points for mesh deformation, and the animation subject is bound to the corresponding structural template.

In this embodiment, the structural template comprises handle nodes. Usually, several handle nodes are set in the structural template, and each handle node controls one part in the structural template. The handle node functions as a joint of an animal. For example, the handle node at a knee joint in a human structural template controls movement of a leg in the skeleton. Selection of mesh points that are close to the handle nodes in the structural template from the mesh may be implemented by Euler distance calculation. When a mesh point is added to the mesh as a constraint point for mesh deformation, if a handle node has no corresponding mesh point within a certain distance, binding of the animation subject to the structural template fails. In this case, reselection of mesh points may be performed to rebinding the animation subject to a corresponding structural template. The successfully bound mesh point will move as motion of a corresponding handle node, which may be realized by completely copying by the mesh point a motion vector of the handle node.

In some optional embodiments, the animation subject may be aligned with the structural template before the animation subject is bound to the structural template.

In the case where the structural template is automatically generated by the device or manually created by the user, the key points in the structural template are originally generated depending on the current animation subject, so their positions are already accurately aligned and no alignment is required. In the case where the structural template is fully predetermined, it requires to move the structural template to a preset position of the animation subject. The processing may be divided into the following two cases.

In the case where the source image is taken by the user as indicated by a preset subject area, since the predefined structural template in the database is already aligned with the preset subject area and the animation subject is consistent with the preset subject area, it can be considered that manual alignment of the structural template and animation subject has been done, and thus there is no need to further perform alignment of the structural template.

In the case where the source image is acquired without indication by a preset subject area, the device needs to respectively calculate coordinates, size and contour axis inclination of an animation subject area and the subject, and then align, according to calculation results, required displacement, scale and angle in a coordinate system. The structural template and thus is aligned with the subject by moving the subject area to a position consistent with the animation subject by shifting, scaling, rotating, etc. of the subject area.

Fig. 8 is a flowchart illustrating a second embodiment of binding an animation subject to a corresponding structural template (i.e., step S32 in Fig. 3). In this embodiment, the structural template comprises a skeleton tree.

In step S32-21, a meshing process is performed on the animation subject.

It should be noted that the operation of "meshing process" also appears in other steps. Regarding the same or similar operations, they may adopt the same implementation or different implementations, which is not limited in this respect.

In step S32-22, the animation subject is bound to the corresponding structural template by applying a skinning method on the skeleton tree.

The animation subject may be bound to the structural template by any other binding method, which may be personalized according to type of the structural template.

Referring back to Fig. 3, in step S33, the structure template is actuated to drive the animation subject bound to the structural template to perform a corresponding action.

The structural template may perform an action based on a preset action. Alternatively, the structural template may perform actions based on a preset motion rule. Furthermore, the structural template may perform an action as the handle node in the structural template or the node in the skeleton tree are dragged through human-computer interaction. These will be described below in details.

First, it will be described that the structural template performs a series of actions based on a preset series of actions.

The preset action may be one designed action, or a series, one set or multiple sets of designed actions. For each preset structural template, one designed action, or a series, one set or multiple sets of designed actions may be stored. The animation action is selected manually by the user or though random assignment by the device. The action shows motion and deformation of the structural template. Specifically, it can be presented by a displacement of the handle nodes of the structural template in a key frame, or movement of the skeleton in a key frame. A preset action may be obtained by the developer pre-recording data of changes of the handle nodes or the skeleton tree in every key frames. The animation data may be a motion vector of the handle nodes in every key frames, or an amount of displacement rotation of the skeleton in every key frames. Specifically, when designing an action, the developer may draw a standard image of the animation subject, bind the structural template on the standard image, drag key points in the structural template to drive a standard character to action, and preview the animation. The preset action may include an action for expressing emotion of the animation subject, or an action for expressing motion of the animation subject.

In some optional embodiments, an action of the subject following motion of a skeleton model may be implemented as follows.

A mesh or triangle pieces are created based on shape of the subject, and the mesh or triangle pieces are subject to the handle nodes in the structural template, resulting in movement and deformation. Alternatively, the subject is attached to the mesh or triangle pieces as texture such that the subject is subject to the handle nodes in the structural template to form an action.

Coordinates of vertexes of the mesh or triangle pieces may be determined by dividing the involved area into a plurality of regions, setting coordinates of a certain point in advance, and determining other coordinates by means of functions, calculus, matrix, and the like.

For more professional animation effects, it may be that several handle nodes may be set firstly inside the area of the subject, particularly at key parts related to movement (such as joints of a human body), and then depending on animation effects in preview, the handle nodes may be added, deleted or moved. Multiple adjustments may be performed in order to attain optimal effects.

It is possible for the developer to design a plurality of limb actions for every subjects. In such case, one or more appropriate limb actions may be directly used by the device according to emotion of the subject such that the skeleton drives motion of the subject to form an animation. It is also possible for the developer to implement various personalized actions through various human-computer interactions, instead of using predefined actions.

Specifically, an action may be composed of a sequence of key frames storing positions of the handle nodes. The positions of the handle nodes and displacements of the handle nodes in every key frames pre-stored in the computing device may be freely designed by the developer. Animation data prepared by the developer can be previewed and modified by binding to a standard image. During animation production, a displayed image may not be a standard image, but a picture drawn by the user or a picture obtained in various manner, such as a picture downloaded from a network. After the picture is photographed and a result image is bound to the structural template, the device maps motion of the handle nodes to nodes in the subject's mesh or triangle pieces, so that the structural template can drive the animation subject to act according to a preset action. A structural template should be designed with as few handle nodes as possible, and a space among initial positions of the handle nodes should be as large as possible, so that an action with more freedom can be performed by the subject, without conflicts between limb pats.

Next, it will be described that the structural template performs an action based on a preset motion rule.

An animation may be produced by means of self-driven motion of handle nodes or bones according to a certain rule. For example, the motion rule may be based on gravity. In such case, the handle nodes or bones themselves have their respective qualities, and thus under a simulated real gravity field, the handle nodes or the bones drop or fall down accordingly to form an action. Such automatic rule-driven actions of nodes may be implemented with a common physical engine device on the market.

Then, an implementation of dragging the handle nodes or nodes in the skeleton tree of the structural template through human-machine interaction to perform an action will be described. Specifically, it is possible for the user to generate a desired action by an input via human-machine interaction, for example, dragging the handle nodes or the bone nodes with a mouse or via a touch.

In some embodiments, the foregoing three methods may be combined in any combination, and an implementation thereof may be as follows.

Specifically, the automatically animation production and manually animation production may be combined. The nodes of the structural template are always subject to the gravity field, and in addition, an external force may be applied by the user on the nodes through interaction. Thus, an animation may be produced by the device under simulated effects due to superposition of the natural force and the manual force.

In this embodiment, the device applies the animation data to the structural template to drive the animation subject to move. Specifically, depending on the structural template, the animation subject may be driven by the structural template in different manners.

In the case where the structural template is implemented by handle nodes, a motion vector of a handle node is directly passed to a constraint point bound to the node, so that the constraint point is displaced. For a current frame, after displacement of all constraint points, positions of every points are recalculated by the device according to changes in positions of the constraint points, thereby deformed mesh are generated. The positions of every points may be calculated by any appropriate method, which is not limited in this respect. The device then maps pixel groups of the animation subject as texture to the changed mesh, and thereby motion of the animation subject in this frame is finished.

In the case where the structural template is implemented by a skeleton tree, movement of a bone joint causes motion of the entire skeleton, which in turn drives the skinned mesh bound to the skeleton to be displaced and deformed. This may be implemented be any common algorithm, and thus it is not limited in this respect.

Other forms of structural templates may be implemented using any suitable algorithms. In a usual implementation, only data of key frames of an action is included in the animation data, and other transition frames between the key frames may be calculated by mathematical interpolation.

The animation may be repeated until another set of animation actions are selected by the user or another animation subject is acquired by the user for animation production.

It should be noted that the operations described above in Fig. 3 to Fig. 8 may be applied in different combinations. For sake of brevity, various implementations of such combinations will not be described. It is possible for a person skilled in the art to flexibly reorder the operation steps as required or make any appropriate combination thereof.

The foregoing embodiments of the disclosure are described in detail from the perspective of the device. The following is a detailed description of how to make an animation from the perspective of the user.

First, a preset structural template matched with an animation subject is selected.

Next, the subject object is bound to the preset structural template.

Then, a predetermined series of actions are selected for the preset structural template, such that the preset structural template drives, based on the predetermined series of actions, the subject to perform corresponding actions.

In order for simple explanation and not blurring main points of the invention, the method for making an animation will be described by two examples in which a simple animation is made by a child. It will be anticipated by a person skilled in the art that the number of actions may be increased in order to enrich contents of an animation.

In a first example, an animation showing actions of a puppy is made by a child.

First, an subject type, puppy, is selected by the child through a touch on a tablet screen, and a picture of a puppy is bound to a structural template for a puppy;

Then, an emotion type, frustration, is selected by the child through a touch on the tablet screen, such that an animation including a frustrated puppy (the puppy bows his head with a dropping tail and squats in place) appears in the tablet screen.

In a second example, an animation showing bounce of a ball is made by a child.

First, a subject contour, circle, is selected by the child through a touch on a tablet screen, and a picture of a ball is bound to a circular structural template;

Then, an action type, bounce, is selected by the child through a touch on the tablet screen, such that an animation including a bounced ball (the ball goes up into the air, falls on the ground and then is bounced to go up into the air again) appears in the tablet screen.

The user may any other user such as a young person, a middle-aged person or an elder person, than a child. In fact, since the method for making an animation is simple, convenient and interesting, it will be more attractive to children who like to explore and love to create. It is possible for the children to easily create their favorite animations with simple selection operations without mastering knowledge of animation principles that a professional animator masters.

In some optional embodiments, different types of structure templates may be stored in a preset animation material database in the light of animation subject types. The animation subject types may include people, animals, plants, and items. Particularly, the subject type may be old people, children, young men, young women, cats, dogs, fish, flowers, birds and grasses. In addition, the subject type may also be personalized according to requirements of animation production, which is not limited.

In some optional embodiments, the preset animation material database may store structural templates for corresponding contour shapes in light of different contours of animation subjects. The contour shape of a subject may be a circle, a square, a rectangle, a star, a ring, or the like. It should be understood that the contour shape can be not only a planar shape but also a three-dimensional shape. The contour shape may be personalized according to requirements of the animation production, which is not limited.

In some optional embodiments, the emotion type may also include one or more of: happiness, disappointment, silence, anger, sorrow, grief, sadness, worry, boredom, fear, horror, respect, caress, hatred, greed, jealousy, arrogance, guilt and shame. The emotion type of a subject may be represented by actions of the subject, and upon selection of an emotion type, corresponding action data will be invoked. For example, if the animation subject is a dog and the user chooses happiness, the dog will wobble the tail in place. The subject type and the emotion type may also be automatically selected by the device according to characteristics of the subject, such as height of the subject, the number of legs, or brightness and color of the body of the subject. The automatic selection here is particularly suitable for simple situations, for example, a subject will be simply considered as one of: an upright walking animal and a crawling quadruped animal, in which the number of legs is judged simply by the number of forks in a lower part of an entire shape, and height of the body is used to determine whether it is in an upright state or a crawling state, and then an upright walking or crawling action is applied.

According to embodiments of the disclosure, it is possible for a user to easily create an animation that he likes and has professional effects by simple operations without mastering knowledge of professional animation principles, and thus the method is simple and convenient, vivid and interesting, and has a wide range of applications.

In addition, according to embodiments of the disclosure, it is possible to take an image of a self-created picture and extract an animation subject from the image for animation production, which is simple, convenient and interesting and involves a combination of painting and animation making, and thus it is particularly suitable for children.

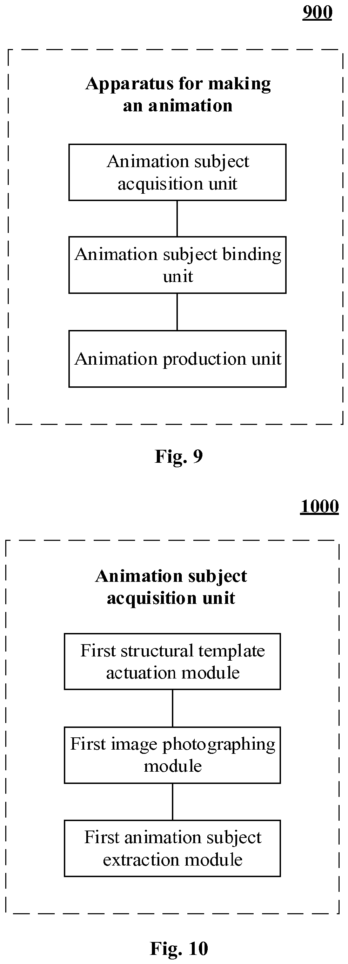

Fig. 9 is a schematically diagram 900 illustrating a functional structure of an apparatus for making an animation according to embodiments of the disclosure.

As shown in Fig. 9, the apparatus for making an animation include: an animation subject acquisition unit, an animation subject binding unit, and an animation production unit.

The animation subject acquisition unit is configured to acquire an animation subject. The animation subject binding unit is configured to bind the animation subject to a corresponding structural template. The animation production unit is configured to actuate the structural template to drive the animation subject bound to the structural template to perform a corresponding action.

Fig. 10 is a schematic diagram 1000 illustrating a functional structure of a first embodiment of an animation subject acquisition unit according to the disclosure. As shown in Fig. 10, the animation subject acquisition unit may include: a first structural template activation module, a first image capturing module, and a first animation subject extraction module.

The first structural template activation module is configured to activate the preset structural template in response to a photographing request. The first image capturing module is configured to capture a source image including a picture of the target subject after the picture of the target subject is substantially matched with the preset structural template. The first animation subject extraction module is configured to extract connected pixel groups within an area in which the preset structural template is located from the source image to generate the animation subject.

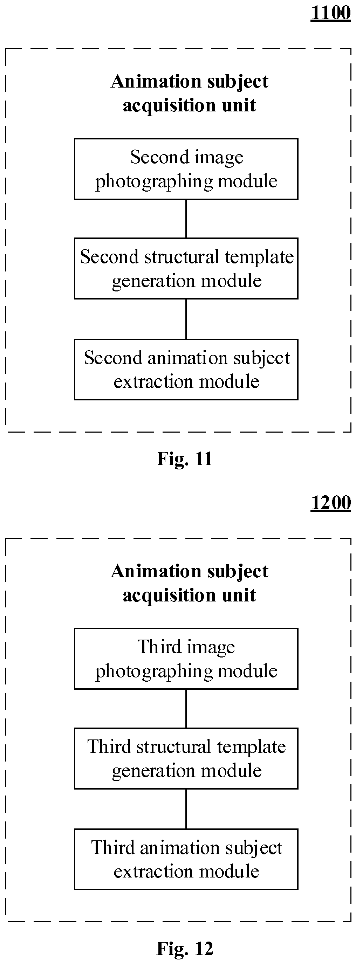

Fig. 11 is a schematic diagram 1100 illustrating a functional structure of a second embodiment of an animation subject acquisition unit according to the disclosure. As shown in Fig. 11, the animation subject acquisition unit may include: a second image capturing module, a second structural template generation module, and a second animation subject extraction module.

The second image capturing module is configured to capture a source image including a target subject. The second structural template generation module is configured to generate the automatically generated structural template by extracting a structure of the target subject from the source image and simplifying lines in the structure. The second animation subject extraction module may be configured to extract connected pixel groups from the source image to generate the animation subject.

Fig. 12 is a schematic diagram 1200 illustrating a functional structure of a third embodiment of an animation subject acquisition unit according to the disclosure. As shown in Fig. 12, the animation subject acquisition unit may include: a third image capturing module, a third structural template generation module, and a third animation subject extraction module.

The third image capturing module may be configured to capture a source image including a picture of a target subject in response to a photographing request. The third structural template generation module may be configured to generate the manually generated structural template by entering positions of key points in the picture of the target subject through human-computer interaction and connecting the key points. The third animation subject extraction module may be configured to extract connected pixel groups from the source image to generate the animation subject.

It should be noted that the first image capturing module, the second image capturing module, the third image capturing module and other similar modules may be implemented by using the same hardware or using different hardware as required.

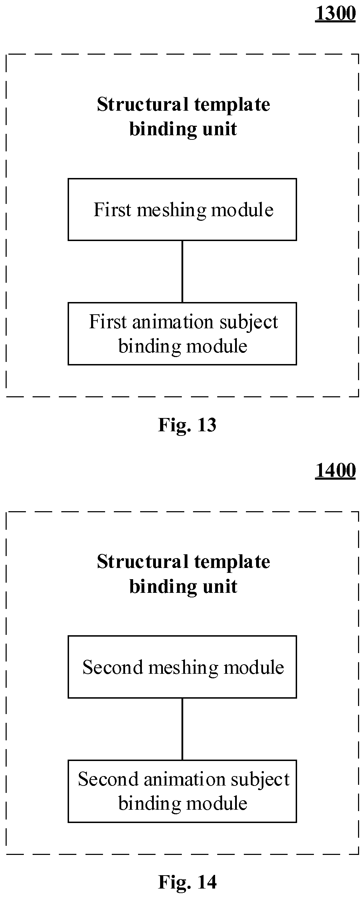

Fig. 13 is a schematic diagram 1300 illustrating a functional structure of a first embodiment of a structural template binding unit according to the disclosure, where the structural template comprises handle nodes. As shown in Fig. 13, the structural template binding unit may include: a first meshing module and a first animation subject binding module.

The first meshing module may be configured to perform a meshing process on the animation subject. The first animation subject binding module may be configured to select mesh points that are close to handle nodes in the structural template from a mesh, use the selected mesh points as constraint points for mesh deformation, and bind the animation subject to the corresponding structural template.

Fig. 14 is a schematic diagram 1400 illustrating a functional structure of a second embodiment of a structural template binding unit according to the disclosure, where the structural template comprises a skeleton tree. As shown in Fig. 14, the structural template binding unit may include: a second meshing module and a second animation subject binding module.

The second meshing module may be configured to perform a meshing process on the animation subject. The second animation subject binding module may be configured to bind the animation subject to the corresponding structural template by applying a skinning method on the skeleton tree.

In some embodiments, the animation production unit may be implemented by one or more of the following ways: the structural template is actuated based on a preset action; the structural template is actuated based on a preset motion rule; and structural template is actuated by dragging of the handle nodes or the nodes in the skeleton tree in the structural template.

In some embodiments, the animation subject may include: a target subject within one or more scenes, a target picture drawn on a drawing plane, or a target item placed on the drawing plane. The drawing plane may include: a drawing card with preset background, or a drawing card with a solid color as its background.

In some embodiments, the apparatus for making an animation may further include: an animation subject recording unit, an animation file generation unit, and an animation file display/storage unit.

The animation subject recording unit may be configured to record images frame by frame during actions of the animation subject. The animation file generation unit may be configured to generate an animation file according to the recorded images, or further configure background and/or an audio file for the animation file. The animation file display/storage unit may be configured to display and/or store the animation file.

It should be noted that the apparatus for making an animation described in the above embodiments may function as an execution entity of the method for making an animation, and various function modules in the apparatus for making an animation are configured to perform respective corresponding steps in the method. In some embodiments of the disclosure, the functional modules may be implemented by a hardware processor. The functional modules only needs to implement respective own functions, and their specific connection relationship is not limited. Since the apparatus for making an animation described in the above embodiments corresponds to the foregoing method for making an animation, it is possible for a person skilled in the art to clearly understand that specific operations of respective functional units described above may correspond to the steps in the foregoing method embodiments, which are are not described herein again for convenience and brevity of the disclosure.

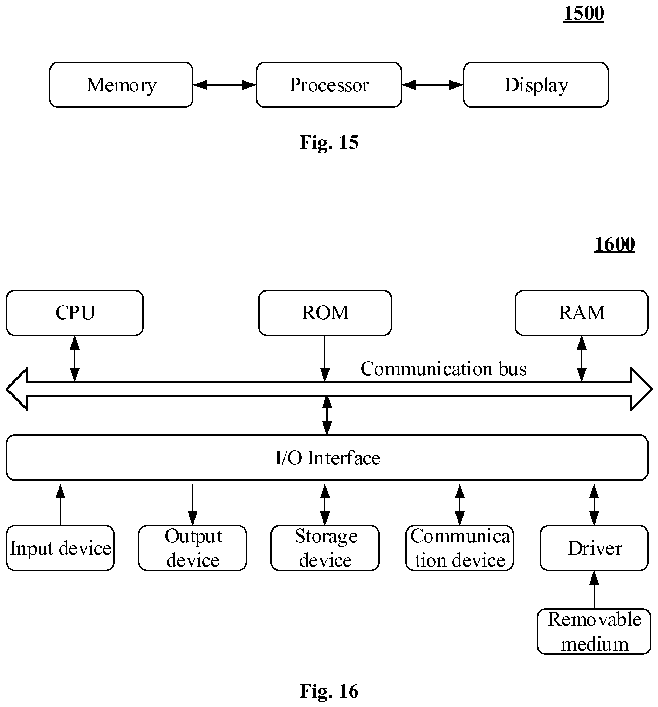

Fig 15 is a schematic diagram 1500 illustrating a frame structure of a first embodiment of an apparatus for making an animation according to the disclosure. As shown in Fig. 15, the apparatus for making an animation may include: a memory, a processor, and a display.

The memory is used to store material data and programs. The processor is used to execute programs stored in the memory, which cause the processor to perform the following operations: acquiring an animation subject; binding the animation subject to a corresponding structural template; and actuating the structural template to drive the animation bound to the structural template to perform a corresponding action. The display is used to display performance of the action by the animation subject.

Fig 16 is a schematic diagram 1600 illustrating a frame structure of a second embodiment of an apparatus for making an animation according to the disclosure.

As shown in Fig. 16, the apparatus include a central processing unit (CPU) that performs various actions and operations according to a program stored in a read only memory (ROM) or a program loaded from a storage device into a random access memory (RAM). In the RAM, various programs and data required for operations of the apparatus are also stored. The CPU, ROM and RAM are connected to each other through a communication bus. An input/output (I/O) interface is also connected to the bus.

The I/O interface is also connected with the following components: an input device including a keyboard, a mouse, and the like; an output device including a cathode ray tube (CRT), a liquid crystal display (LCD), a speaker, and the like; a storage device including a hard disk or the like; a communication device including a network interface card such as a LAN card, modem, etc. The communication device performs communication via a network such as the Internet. A driver is also connected to the I/O interface as required. A removable medium such as a magnetic disk, an optical disk, a magneto-optical disk, a semiconductor memory or the like is mounted on the drive as required so that a computer program read therefrom is loaded into a memory device as required.

However, it is to be understood that the invention is not limited to the specific configurations and processes described above and illustrated in the drawings. Also, a detailed description of known techniques is omitted herein for sake of brevity. In the above embodiments, several specific steps have been described and illustrated as examples. However, the method of the disclosure is not limited to the specific steps described and illustrated, and a person skilled in the art may make various changes, modifications and additions or change the order between the steps under the spirit of the present invention.

The functional modules shown in the block diagrams described above may be implemented as hardware, software, firmware, or a combination thereof. When implemented in hardware, it may be, for example, an electronic circuit, an application specific integrated circuit (ASIC), suitable firmware, plug-ins, function cards, and the like. When implemented in software, the elements of the present invention may be programs or code segments that are used to perform the required tasks. The programs or code segments may be stored in a machine readable medium or transmitted over a transmission medium or communication link through a data signal carried in the carrier. A "machine-readable medium" may include any medium that can store or transfer information. Examples of the machine-readable media may include electronic circuits, semiconductor memory devices, ROM, Flash memory, erasable ROM (EROM), floppy disks, CD-ROMs, optical disks, hard disks, fiber optic media, radio frequency (RF) links, and the like. The code segments may be downloaded via a computer network such as the Internet, an intranet, and the like.

In addition, the functional units or modules in each embodiment of the disclosure may be integrated into one processing unit, or they may exist physically and separately, or two or more units may be integrated into one unit. The integrated unit may be implemented in the form of hardware or in the form of software functional unit.

A person skilled in the art will appreciate that the above-described embodiments are illustrative and not restrictive. Different technical features that appear in different embodiments can be combined to achieve a beneficial effect. Other variations of the disclosed embodiments will be understood and practiced by a person skilled in the art. In the claims, the term "comprising" does not exclude other components or steps; the indefinite article "a" or "an" does not exclude plural elements, and the terms "first," "second," and "third" are used to name instead of indicating any particular order. Any reference signs in the claims should not be construed as limiting the scope of the invention. The functions of various parts appearing in the claims may be implemented by a single hardware or software module. The fact that certain technical features appear in different dependent claims does not mean that these technical features cannot not combined to the advantage.

It will be appreciated by a person skilled in the art that the elements and algorithm steps of the various examples described in connection with embodiments of the disclosure can be implemented in electronic hardware, computer software, or a combination thereof, and in order to clearly illustrate interchangeability of hardware and software, the components and steps of the various examples have been generally described in terms of function in the above description. Whether these functions are implemented in hardware or software depends on specific application and design constraints of an involved solution. A person skilled in the art can use a different method for implementing the described functions for a different particular application, but such implementation should be considered as falling within scope of the present invention.

The above descriptions are provided to illustrate specific embodiments of the disclosure, but the scope of the present invention is not limited thereto. It will be obvious by a person skilled in the art to anticipate various equivalent modification and alternations that are within the scope of the present invention. Therefore, the scope of the present invention should be determined by the appended claims.

## Claims

1. A method for making an animation, comprising:
acquiring an animation subject;
binding the animation subject to a corresponding structural template; and
actuating the structural template to drive the animation subject bound to the structural template to perform a corresponding action.

2. The method according to claim 1, wherein the structural template is a preset structural template, and said acquiring an animation subject comprises:
activating the preset structural template in response to a photographing request;
capturing, after substantially matching a picture of a target subject with the preset structural template, a source image including the picture of the target subject; and
extracting connected pixel groups within an area in which the preset structural template is located from the source image to generate the animation subject.

3. The method according to claim 1, wherein the structural template is an automatically generated structural template, and said acquiring an animation subject comprises:
capturing a source image including a target subject;
generating the automatically generated structural template by extracting a structure of the target subject from the source image and simplifying lines in the structure; and
extracting connected pixel groups from the source image to generate the animation subject.

4. The method according to claim 1, wherein the structural template is a manually generated structural template, and said acquiring an animation subject comprises:
capturing a source image including a picture of a target subject in response to a photographing request;
generating the manually generated structural template by entering positions of key points in the picture of the target subject through human-computer interaction and connecting the key points; and
extracting connected pixel groups from the source image to generate the animation subject.

5. The method according to any one of claims 1 to 4, wherein the structural template comprises handle nodes, and said binding the animation subject to a corresponding structural template comprises:
performing a meshing process on the animation subject; and
selecting mesh points that are close to the handle nodes in the structural template among the mesh, using the selected mesh points as constraint points for mesh deformation, and binding the animation subject to the corresponding structural template.

6. The method according to claim 5, wherein the structural template comprises a skeleton tree, and said binding the animation subject to a corresponding structural template comprises:
performing a meshing process on the animation subject; and
binding the animation subject to the corresponding structural template by applying a skinning method on the skeleton tree.

7. The method according to claim 6, wherein said actuating the structural template comprises at least one of:
actuating the structural template based on a preset action;
actuating the structural template based on a preset motion rule; and
actuating the structural template by dragging, through human-computer interaction, the handle nodes or nodes of the skeleton tree in the structural template.

8. The method according to any one of claims 1 to 4, wherein the animation subject comprises: a target subject within one or more scenes, a target image drawn on a drawing plane, a target item placed on a drawing plane,
wherein the drawing plane comprises:
a drawing card with preset background, or a drawing card with solid background.

9. The method according to any one of claims 1 to 4, further comprising:
recording images frame by frame during actions of the animation subject;
generating an animation file according to the recorded images; and
displaying and/or storing the animation file.

10. The method according to any one of claims 1 to 4, further comprising:
configuring background and/or an audio file for the animation file.

11. An apparatus for making an animation, comprising:
an animation subject acquisition unit configured to acquire an animation subject;
an animation subject binding unit configured to bind the animation subject to a corresponding structural template; and
an animation production unit configured to actuate the structural template to drive the animation subject bound to the structural template to perform a corresponding action.

12. The apparatus according to claim 11, wherein the structural template is a preset structural template, and the animation subject acquisition unit comprises:
a first structural template activation module configured to activate the preset structural template in response to a photographing request;
a first image capturing module configured to capture, after substantially matching a picture of a target subject with the preset structural template, a source image including the picture of the target subject; and
a first animation subject extraction module configured to extract connected pixel groups within an area in which the preset structural template is located from the source image to generate the animation subject.

13. The apparatus according to claim 11, wherein the structural template is an automatically generated structural template, and the animation subject acquisition unit comprises:
a second image capturing module configured to capture a source image including a target subject;
a second structural template generation module configured to generate the automatically generated structural template by extracting a structure of the target subject from the source image and simplifying lines in the structure; and
a second animation subject extraction module configured to extract connected pixel groups from the source image to generate the animation subject.

14. The apparatus according to claim 11, wherein the structural template is a manually generated structural template, and the animation subject acquisition unit comprises:
a third image capturing module configured to capture a source image including a picture of a target subject in response to a photographing request;
a third structural template generation module configured to generate the manually generated structural template by entering positions of key points in the picture of the target subject through human-computer interaction and connecting the key points; and
a third animation subject extraction module configured to extract connected pixel groups from the source image to generate the animation subject.

15. The apparatus according to any one of claims 11 to14, wherein the structural template comprises handle nodes, and the structural template binding unit comprises:
a first meshing module configured to perform a meshing process on the animation subject; and
a first animation subject binding module configured to select mesh points that are close to handle nodes in the structural template from a mesh, use the selected mesh points as constraint points for mesh deformation, and bind the animation subject to the corresponding structural template.

16. The apparatus according to claim 15, wherein the structural template comprises a skeleton tree, and the structural template binding unit comprises:
a second meshing module configured to perform a meshing process on the animation subject; and
a second animation subject binding module configured to bind the animation subject to the corresponding structural template by applying a skinning method on the skeleton tree.

17. The apparatus according to claim 16, wherein said animation production unit is configured to perform at least one of the following operations:
activating the structural template based on a preset action;
activating the structural template based on a preset motion rule; and
activating the structural template by dragging, through human-computer interaction, the handle nodes or node of the skeleton tree in the structural template.

18. The apparatus according to any one of claims 11 to 14, wherein the animation subject comprises: a target subject within one or more scenes, a target image drawn on a drawing plane, a target item placed on a drawing plane,
wherein the drawing plane comprises:
a drawing card with preset background, or a drawing card with solid background.

19. The apparatus according to any one of claims 11 to 14, further comprising:
an animation subject recording unit configured to record images frame by frame during actions of the animation subject;
an animation file generation unit configured to generate an animation file according to the recorded images, or further configure background and/or an audio file for the animation file; and
an animation file display/storage unit configured to display and/or store the animation file.

20. An apparatus for making an animation, comprising:
a memory for storing material data and programs;
a processor for executing the programs stored by the memory, which cause the processor to perform the following operations:
acquiring an animation subject;
binding the animation subject to a corresponding structural template; and
activating the structural template to drive the animation subject bound to the structural template to perform a corresponding action, and
a display for displaying performance of the action by the animation subject.
